# EUROPÄISCHE PATENTANMELDUNG

(11) **EP 3 059 739 A1**
(43) Veröffentlichungstag der Anmeldung: **24.08.2016**
(21) Anmeldenummer: 15155934.1
(22) Anmeldetag: 20.02.2015
(51) Int. Cl.: H01B 3/18, C08K 3/00, H01B 1/16, H01B 3/30, H01B 3/48

(54) **Isolationselement mit geringer elektrischer Leitfähigkeit zur elektrischen Isolation im Hochspannungsbereich**

(71) Anmelder: Wicor Holding AG, 8640 Rapperswil (CH)
(72) Erfinder: Wolfinger, Tobias, 8730 Uznach (CH); Jaufer, Stefan, 8630 Rüti (CH); Exner, Wolfgang, 8735 St. Gallenkappel (CH)
(74) Vertreter: Rutz, Andrea

(57) **Zusammenfassung**

Es wird ein Isolationselement (1) mit geringer elektrischer Leitfähigkeit zur elektrischen Isolation eines elektrotechnischen Bauelements im Hochspannungsbereich angegeben. Das Isolationselement (1) weist einen natürlichen Faserstoff (2) sowie elektrisch leitfähige Partikel (3) mit einem elektrisch nichtleitenden Kern (5) und einer den Kern (5) umgebenden, elektrisch leitfähigen oder halbleitfähigen Umhüllung (6) auf. Ausserdem weist das Isolationselement (1) ein kationisches Polymer (4) auf.

## Beschreibung

### TECHNISCHES GEBIET

Die vorliegende Erfindung betrifft ein Isolationselement mit geringer elektrischer Leitfähigkeit zur elektrischen Isolation eines elektrotechnischen Bauelements im Hochspannungsbereich. Die Erfindung betrifft ausserdem ein elektrotechnisches Bauelement mit einem derartigen Isolationselement sowie ein Verfahren zur Herstellung eines solchen Isolationselements.

### STAND DER TECHNIK

Isolationselemente stellen einen wichtigen Bestandteil von elektrotechnischen Bauelementen und insbesondere Transformatoren dar. Die Isolationselemente dienen dazu, zwei elektrische Leiter, welche sich im Betrieb des Bauelements, auf unterschiedlichen Spannungspotentialen befinden, elektrisch gegeneinander zu isolieren. Im Isolationselement selbst kann sich dadurch ein elektromagnetisches Feld etablieren. Bei der Isolation von Transformatorwicklungen kommen oft Isolationselemente zum Einsatz, die mit Transformatorenöl imprägniert sind, um dadurch eine effiziente Kühlung der Wicklungen zu erzielen.

Aus verschiedenen Gründen ist es bei vielen Anwendungen und insbesondere bei HVDC-Stromrichtertransformatoren erwünscht, dass die Isolationselemente nicht vollständig isolierend wirken, sondern eine genau einstellbare, geringfügige Leitfähigkeit aufweisen. Die Leitfähigkeit des Isolationselements kann beispielsweise an diejenige des Transformatorenöls angepasst werden, um dadurch die Durchschlagfestigkeit der Transformatorisolation insgesamt zu verbessern. Indem das Isolationselement sogar eine höhere Leitfähigkeit als das Transformatorenöl aufweist, kann das elektrische Feld mehr in das Isolieröl gedrängt und somit zu hohe, lokale Feldstärken im Isolationselement verhindert werden. Die Feststoffisolation wird dadurch entlastet bzw. kann kleiner dimensioniert werden. Eine kleinere Dimensionierung, d.h. geringere Dicke, des Isolationselements bedeutet einerseits weniger Materialverbrauch und somit geringere Kosten bei der Herstellung des Isolationselements. Andererseits beansprucht das Isolationselement dadurch aber auch weniger Volumen im elektrotechnischen Bauelement, wodurch dieses ebenfalls kleiner dimensioniert und kostengünstiger hergestellt werden kann. Je nach Typ und Anwendung des elektrotechnischen Bauelements sind in Bezug auf die darin verwendeten Isolationselemente also gewisse Leitfähigkeiten durchaus erstrebenswert.

Um möglichst konstante Bedingungen beim Betrieb des elektrotechnischen Bauelements zu haben, also beispielsweise auch während der Inbetriebnahme eines Transformators, sollten die elektrischen Eigenschaften des Isolationselements so weit wie möglich temperaturunabhängig sein. Die elektrische Leitfähigkeit der meisten üblichen Isolationselemente ist jedoch stark temperaturabhängig.

Das Dokument WO 2008/119705 A1 offenbart ein Isolationselement mit einer Matrix aus einem Polymermaterial. Um eine gewisse elektrische Leitfähigkeit zu erreichen, sind im Polymermaterial elektrisch leitfähige Partikel eingelagert.

Insbesondere bei Transformatoren kommen häufig Isolationselemente zum Einsatz, welche einen natürlichen Faserstoff, wie zum Beispiel Cellulose, enthalten. Natürliche, aus Zellstoff bestehende Faserstoffe und insbesondere Cellulose haben ausgezeichnete dielektrische Eigenschaften und weisen eine ausreichende Durchschlagsfestigkeit auf. Zudem sind sie als nachwachsender Rohstoff sehr gut verfügbar und deshalb kostengünstig. Ausserdem zeichnen sich aus Zellstoff hergestellte Isolationselemente durch ihre gute Imprägnierbarkeit mit Transformatorenöl aus.

Ein auf Cellulose basierendes Material, bei welchem mittels Einlagerung von leitfähigen Partikeln eine gewisse Leitfähigkeit erreicht wird, ist in der EP 0 953 680 A1 offenbart. Das gemäss dem in diesem Dokument hergestellte Material weist jedoch mit wenigstens 2.0 mS/cm eine für die Isolation von vielen elektrotechnischen Bauelementen und insbesondere für die Transformatorenisolation weitaus zu hohe Leitfähigkeit auf.

In der DE 29 34 007 wird ein Papier- oder Pappeerzeugnis mit einem darin eingebauten metallischen Füllstoff offenbart. Für viele elektrotechnische Anwendungen ist die elektrische Leitfähigkeit des in diesem Dokument angegebenen Papier- oder Pappeerzeugnisses daher zu stark ausgeprägt.

Die DE 10 2010 041 630 A1 offenbart eine auf Cellulosematerial basierende Transformatorisolation, deren spezifischer Widerstand mit Hilfe von halbleitenden oder nichtleitenden Nanopartikeln an den Widerstand des Öls angepasst wird. Die im Cellulosematerial verteilten Nanopartikel sind dazu mit einem elektrisch leitfähigen Polymer beschichtet. Die Herstellung eines Isolationselements gemäss der Lehre dieses Dokuments gestaltet sich aber schwierig und ist mit verhältnismässig hohen Kosten verbunden, da die Nanopartikel bei der notwendigerweise durchzuführenden Entwässerung des Cellulosematerials zu einem grossen Teil ausgeschwemmt werden und es dadurch zu einem erheblichen Partikelverlust kommt. Zudem weist das Isolationselement eine ungleichmässige elektrische Leitfähigkeit auf.

### DARSTELLUNG DER ERFINDUNG

Es ist also eine Aufgabe der vorliegenden Erfindung, für die elektrische Isolation eines elektrotechnischen Bauelements im Hochspannungsbereich ein kostengünstig herstellbares Isolationselement zur Verfügung zu stellen, welches eine genau einstellbare, geringe und homogen verteilte elektrische Leitfähigkeit aufweist.

Zur Lösung dieser Aufgabe wird ein Isolationselement vorgeschlagen, wie es in Anspruch 1 angegeben ist. Ausserdem wird in Anspruch 14 ein elektrotechnisches Bauelement mit einem derartigen Isolationselement sowie in Anspruch 16 ein Verfahren zur Herstellung eines derartigen Isolationselements angegeben. Bevorzugte Ausführungsformen sind in den abhängigen Ansprüchen angegeben.

Die vorliegende Erfindung stellt also ein Isolationselement mit geringer elektrischer Leitfähigkeit zur elektrischen Isolation eines elektrotechnischen Bauelements im Hochspannungsbereich zur Verfügung, aufweisend einen natürlichen Faserstoff sowie elektrisch leitfähige Partikel mit einem elektrisch nichtleitenden Kern und einer den Kern umgebenden, elektrisch leitfähigen oder halbleitfähigen Umhüllung. Das Isolationselement weist ausserdem ein kationisches Polymer auf.

Das kationische Polymer ermöglicht eine innerhalb des Isolationselementes homogen verteilte geringe elektrische Leitfähigkeit, insbesondere eine homogen verteilte geringe elektrische Leitfähigkeit über die Dicke des Isolationselementes, zu erzielen. Bevorzugt sind hierzu die elektrisch leitfähigen Partikel und/oder das kationische Polymer homogen im Isolationselement verteilt. Bevorzugt ist die homogene Verteilung über die Dicke des Isolationselementes und vorteilhaft über das gesamte Isolationselement gegeben.

Bevorzugt wird das Isolationselement zur elektrischen Isolation im Hochspannungsbereich verwendet. Es kann aber auch zur Isolation bei Spannungen unterhalb des Hochspannungsbereichs verwendet werden. Zum Hochspannungsbereich werden üblicherweise Wechselspannungen mit einem Effektivwert von zumindest 1000 Volt sowie Gleichspannungen von zumindest 1500 Volt gezählt. Bevorzugt ist das Isolationselement sogar derart ausgebildet, dass es bei beliebigen Spannungen von wenigstens 100 kV, und insbesondere bevorzugt von wenigstens 350 kV, elektrisch isolierend wirkt.

Vorteilhaft ist das Isolationselement und insbesondere der natürliche Faserstoff mit Öl, insbesondere Transformatorenöl, imprägniert. Das Isolationselement weist dann also Öl, insbesondere Transformatorenöl, auf und ist dadurch unmittelbar für eine entsprechende elektrotechnische Anwendung verwendbar. Für viele elektrotechnische Anwendungen und insbesondere für den Einsatz in Transformatoren und im Speziellen in HVDC-Stromrichtertransformatoren weist das mit Öl, insbesondere Transformatorenöl, imprägnierte Isolationselement bevorzugt eine elektrische Leitfähigkeit von wenigstens 1*10⁻¹⁶ S/m, bevorzugter von wenigstens 1*10⁻¹⁴ S/m, noch bevorzugter von wenigstens 1*10⁻¹² S/m auf. Bevorzugt beträgt die maximale elektrische Leitfähigkeit 1*10⁻⁷ S/m, bevorzugter 1*10⁻⁸ S/m. Die elektrische Leitfähigkeit in Öl wird gemäss der Norm IEC 60093, 2. Ausgabe, 1.1.1980 gemessen. Durch die Verwendung der elektrisch leitfähigen Partikel mit einem elektrisch nichtleitenden Kern und einer den Kern umgebenden, elektrisch leitfähigen oder halbleitfähigen Umhüllung ist die elektrische Leitfähigkeit des Isolationselements genau und insbesondere auf diese vorteilhaften Werte einstellbar.

Das Isolationselement kann eine oder mehrere Lagen aufweisen, welche jeweils den natürlichen Faserstoff sowie die elektrisch leitfähigen Partikel und das kationisches Polymer aufweisen. Die einzelnen Lagen sind dabei vorteilhaft miteinander verbunden. Falls das Isolationselement wenigstens zwei Lagen aufweist, so sind die elektrisch leitfähigen Partikel und / oder das kationische Polymer bevorzugt in wenigstens einer Lage, bevorzugter in jeder Lage, homogen verteilt. Bevorzugt ist die homogene Verteilung über die Dicke wenigstens einer Lage, bevorzugter über die Dicke jeder Lage, gegeben.

Bevorzugt wird bei der Herstellung des Isolationselements so viel kationisches Polymer verwendet, dass das kationische Polymer bezogen auf das Gesamtgewicht des Isolationselements im Trockenzustand 0.1 - 10 Gew.-%, bevorzugter 0.2 - 2 Gew.-%, und am meisten bevorzugt 0.5 - 1.0 Gew.-%, ausmacht. Es resultiert eine besonders gute Herstellbarkeit des Isolierelementes bei der Verwendung der genannten Mengen an kationischem Polymer.

Im Rahmen dieser Erfindung ist in Bezug auf das Isolationselement unter dem Ausdruck "im Trockenzustand" zu verstehen, dass das Isolationselement 1 Gew.-% oder weniger Wasser aufweist bezogen auf das Gesamtgewicht des Isolationselementes. Die Messung des Wassergehaltes wird mittels der Norm IEC 60814, 2. Ausgabe, 29.8.1997 durchgeführt. Für die Wassermessung wird ein Probenofen Metrohm 774 kombiniert mit einem 831 KF Coulometer verwendet.

Bevorzugt machen die die elektrisch leitfähigen Partikel 1 - 30 Gew.-%, bevorzugter 4 - 30 Gew.-%, noch bevorzugter 8 - 30 Gew.-%, am bevorzugtesten 10 - 30 Gew.-%, des Gesamtgewichts des Isolationselements im Trockenzustand aus. Diese Partikelmengen erlauben eine definierte Einstellung der elektrischen Leitfähigkeit in Öl insbesondere in den Bereichen von 1*10⁻¹⁶ S/m bis 1*10⁻⁸ S/m, 1*10⁻¹⁴ S/m bis 1*10⁻⁸ S/m sowie 1*10⁻¹² S/m bis 1*10⁻⁸ S/m, welche insbesondere bei Transformatorenanwendungen wichtig sind. Bei wenigstens 10 Gew.-% an elektrisch leitfähigen Partikeln sind für die elektrische Leitfähigkeit hauptsächlich die elektrisch leitfähigen Partikel und nicht mehr der Faserstoff massgebend, was mit dem Perkolationseffekt der Partikel erklärbar ist. Die elektrische Leitfähigkeit des Isolationselements kann dann mit Hilfe einer entsprechenden Partikelwahl genau eingestellt werden und ist im Wesentlichen unabhängig von der Partikelkonzentration. Ab dieser Partikeldosierung ist die elektrische Leitfähigkeit des Isolationselements zudem weitgehend temperaturunabhängig. Wenn die Partikelkonzentration in einem Bereich von 10 - 25 Gew.-%, bevorzugt in einem Bereich von 10 - 20 Gew.-%, bevorzugter in einem Bereich von 10 - 18 Gew.-%, noch bevorzugter in einem Bereich von 10 - 16 Gew.-%, am bevorzugtesten in einem Bereich von 10 - 15 Gew.-%, bezogen auf das Gesamtgewicht des Isolationselement im Trockenzustand liegt, kann eine klar definierte, von der Partikelkonzentration und der Temperatur weitgehend unabhängige elektrische Leitfähigkeit des Isolationselements bei einem minimalen Partikelaufwand erreicht werden. Da die Partikel üblicherweise einen besonders kostspieligen Bestandteil des Isolationselements darstellen, können auf diese Weise die Gesamtkosten des Isolationselements vermindert werden.

Ein optimaler Perkolationseffekt kann beobachtet werden, wenn die elektrisch leitfähigen Partikel plättchenförmig sind. Die notwendige Menge an elektrisch leitfähigen Partikeln im Isolationselement kann mittels einer plättchenförmigen Ausgestaltung der Partikel also gesenkt werden.

Der natürliche Faserstoff wird vorteilhaft aus Holz und/oder Einjahrespflanzen, insbesondere Baumwolle, gewonnen. Alternativ oder zusätzlich kann der Faserstoff aber auch auf Abaca, Jute, Hanf, Sisal und/oder Altpapier basieren.

Vorteilhaft macht der natürliche Faserstoff wenigstens 60 Gew.-%, insbesondere wenigstens 80 Gew.-%, bezogen auf das Gesamtgewicht des Isolationselements im Trockenzustand aus. Das Isolationselement ist dadurch kostengünstig herstellbar und gut mit Transformatorenöl imprägnierbar.

Die elektrisch leitfähige oder halbleitfähige Umhüllung umgibt den Kern der Partikel vorteilhaft jeweils vollständig. Sie basiert vorteilhaft auf einem anorganischen Material. Bevorzugt enthält die Umhüllung der elektrisch leitfähigen Partikel ein Metall, bevorzugter ein Metalloxid. Partikel umfassend eine Metall enthaltende, insbesondere eine ein Metalloxid enthaltende, Umhüllung erlauben eine besser definierbare Einstellung der elektrischen Leitfähigkeit im Isolationselement. Zudem ist ein solches Partikel einfacher herstellbar sowie beständiger. Beim Metalloxid kann es sich beispielsweise um Zinnoxid, Zinkoxid, Antimonoxid, Titandioxid, Zirkoniumdioxid, Indiumdioxid. Siliziumdioxid oder beispielsweise um einen Mischung einzelner der genannten Metalloxide handeln. Bevorzugt ist das Metalloxid mit einem Fremdatom dotiert. Mittels einer geeigneten Wahl und Dosierung des Fremdatoms kann die Leitfähigkeit des Isolationselements genau an einen gewünschten Wert angepasst werden. Als Dotierungsatome kommen zum Beispiel Gallium, Aluminium, Indium, Thallium, Germanium, Zinn, Phosphor, Arsen, Antimon, Selen, Tellur und/oder Fluor in Frage.

Die Grösse der elektrisch leitfähigen Partikel liegt vorteilhaft bei höchstens 200 µm (Mikrometer), vorteilhafter bei höchstens 100 µm, und noch vorteilhafter bei höchstens 60 µm. Bevorzugt liegt die Partikelgrösse zudem bei mindestens 2 µm. Es hat sich gezeigt, dass mit Partikeln in diesen Grössenbereichen in Kombination mit dem kationischen Polymer die elektrische Leitfähigkeit besonders genau einstellbar ist. Bevorzugt liegt die Dicke der elektrisch leitfähigen Partikel, insbesondere falls die elektrisch leitfähigen Partikel plättchenförmige Partikel sind, im Bereich von 0.3 bis 4 µm, insbesondere im Bereich von 0.5 bis 3 µm.

Die Teilchengröße und die Teilchengrößenverteilung können über verschiedene fachübliche Methoden ermittelt werden. Bevorzugt wird erfindungsgemäß jedoch die Laserbeugungsmethode in einem Standardverfahren mittels eines Malvern Mastersizer 2000, APA2000 (Produkt der Fa. Malvern Instruments Ltd., UK) eingesetzt. Dieses Verfahren hat den Vorteil, dass Partikelgröße und Partikelgrößenverteilung gleichzeitig unter Standardbedingungen bestimmt werden können.

Die Partikelgröße sowie die Dicke von Einzelpartikeln lässt sich außerdem mit Hilfe von SEM (Scanning Electron Microscope) Bildern ermitteln. Bei diesen können Partikelgröße und geometrische Partikeldicke über direktes Ausmessen ermittelt werden. Zur Ermittlung von Durchschnittswerten werden mindestens 1000 Partikel einzeln ausgewertet und die Ergebnisse gemittelt.

Beim Kern der elektrisch leitfähigen Partikel handelt es sich vorteilhaft um ein mineralisches Material. Bevorzugt weist der Kern einen natürlichen oder synthetischen Glimmer auf. Der Kern kann aber auch Kalziumkarbonat, Kreide, Talkum, Bentonit, Kaolin, Glas, Titandioxid, Siliziumdioxid (SiO₂), Sericit oder Aluminiumoxid (Al₂O₃) aufweisen. Elektrisch leitfähige Partikel umfassend Glimmer weisen eine höhere Beständigkeit auf und können besser beschichtet werden.

In einer insbesondere bevorzugten Ausführungsform handelt es sich bei den elektrisch leitfähigen Partikeln um das Produkt der Firma Merck, Darmstadt mit dem Handelsnamen Minatec^{®} 51 CM und/oder das Produkt der Firma Merck, Darmstadt mit dem Handelsnamen Minatec^{®} 31 CM. Beim elektrisch leitfähigen Partikel kann es sich auch um die Produkte der Firma Merck, Darmstadt mit dem Handelsnamen Minatec^{®} 40 CM, Minatec^{®} 60 CM oder Minatec^{®} 42 CM handeln.

Als kationisches Polymer wird bevorzugt Polyethylenimin (PEI) und/oder kationische Stärke verwendet. Es kann sich beim kationischen Polymer aber auch um Polyacrylamid (PAM), Polydiallyldimethylammoniumchlorid (PDADMAC), Polyvinylalkohol, Polyesterepoxyharz, Polyvinylamin (PVAm), Polyethylenoxid (PEO), Dicyandiamidformaldehyd (DCD), Polyamidoamin (PAMAM), Polyaminoamidepichlorohydrin (PAE) oder Polyamidepoxyharz handeln.

Gemäss einer Weiterbildung der Erfindung enthält der natürliche Faserstoff mindestens 50 Gew.-%, bevorzugt mindestens 70 Gew.-%, insbesondere 70 - 99 Gew.-%, an Cellulose bezogen auf das Gesamtgewicht des natürlichen Faserstoffs im Trockenzustand.

Im Rahmen dieser Erfindung ist in Bezug auf den natürlichen Faserstoff unter dem Ausdruck "im Trockenzustand" zu verstehen, dass der natürliche Faserstoff 1 Gew.-% oder weniger Wasser aufweist bezogen auf das Gesamtgewicht des Faserstoffes. Die Messung des Wassergehaltes wird mittels der Norm ISO 4119, 2. Ausgabe, 1.6.1995 durchgeführt. Das Isolationselement kann neben dem natürlichen Faserstoff zudem auch mikro- und/oder nanoskalige Cellulose enthalten. Es kann selbstverständlich neben dem natürlichen Faserstoff eine beliebige Anzahl weiterer Materialien enthalten sein. So können neben dem natürlichen Faserstoff im Isolationselement beispielsweise auch Polyolefine (insbesondere Polyethylen), Polysulfon, Polyesterharz, Keramik, Aramid, Polytetrafluorethylen, Amylose, Amylopektin, Stärke, Algin, Pektin, Carrageenan, Johannisbrotkernmehl, Xanthan, Guaran, Agar, Furcellaran, Carboxymethylcellulose (CMC) und/oder Tamarindenextrakt enthalten sein.

Bevorzugt liegt das Isolationselement in Form von Papier, Karton oder Pappe vor.

Die Erfindung betrifft ausserdem ein elektrotechnisches Bauelement für den Hochspannungsbereich mit einem Isolationselement, welches wie ausgeführt ausgebildet ist. Beim elektrotechnischen Bauelement kann es sich insbesondere um einen Transformator, wie einen HVDC-Stromrichtertransformator, handeln.

Die vorliegende Erfindung gibt zudem ein Verfahren zur Herstellung eines Isolationselements an, welches wie ausgeführt ausgebildet ist. Das Verfahren weist zumindest die folgenden Verfahrensschritte auf:
- Vermischen des natürlichen Faserstoffs mit elektrisch leitfähigen Partikeln, die einen elektrisch nichtleitenden Kern sowie eine den Kern umgebende, elektrisch leitfähige oder halbleitfähige Umhüllung aufweisen; und
- Entwässern des mit den elektrisch leitfähigen Partikeln vermischten natürlichen Fasserstoffs.

Das Verfahren weist ausserdem den Verfahrensschritt auf, dass dem natürlichen Faserstoff vor dem Entwässern ein kationisches Polymer beigemischt wird. Das Beimischen des kationischen Polymers kann vor, nach oder mit dem Vermischen des natürlichen Faserstoffs mit den elektrisch leitfähigen Partikeln durchgeführt werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Querschnittsansicht eines ersten erfindungsgemässen Isolationselements, mit einer verhältnismässig geringen Dosierung an elektrisch leitfähigen Partikeln;
- Fig. 2: eine schematische Querschnittsansicht eines zweiten erfindungsgemässen Isolationselements, mit einer im Vergleich zur Fig. 1 erhöhten Dosierung an elektrisch leitfähigen Partikeln;
- Fig. 3 a, b, c: schematische Querschnittsansichten von elektrisch leitfähigen Partikeln; sowie
- Fig. 4: eine Graphik, welche den Zusammenhang zwischen der elektrischen Leitfähigkeit eines erfindungsgemässen Isolationselementes und dessen Gehalt an elektrisch leitfähigen Partikeln zeigt.

### BESCHREIBUNG BEVORZUGTER AUSFÜHRUNGSFORMEN

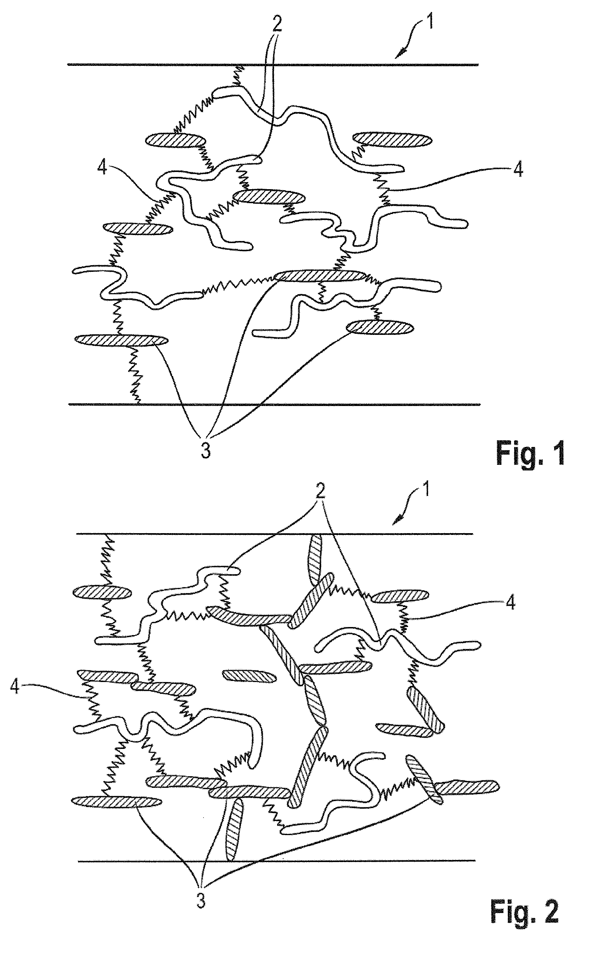

Nachfolgend wird ein Verfahren zum Herstellen eines bevorzugten Ausführungsbeispiels eines erfindungsgemässen Isolationselements 1 zur elektrischen Isolation eines elektrotechnischen Bauelements im Hochspannungsbereich angegeben. In den Figuren 1 und 2 sind schematische Querschnittsansichten gezeigt von derartigen Isolationselementen 1, mit jeweils einer unterschiedlichen Dosierung an elektrisch leitfähigen Partikeln 3.

Für die Herstellung des erfindungsgemässen Isolationselements 1 dieses Ausführungsbeispiels wird ein Faserstoff 2 natürlicher Herkunft eingesetzt, welcher aus mindestens 60 %, im Idealfall 70 - 99 % aus Cellulose besteht bezogen auf das Gesamtgewicht des natürlichen Faserstoffs im Trockenzustand. Die Cellulose wird dabei beispielsweise aus einem natürlichen Faserstoff 2, wie beispielsweise Holz, oder einer Einjahrespflanze, wie beispielsweise Baumwolle, gewonnen. Der Faserstoff 2 wird gemahlen, so dass er für die weitere Verarbeitung in einer gemahlenen Form vorliegt. Er weist einen Entwässerungswiderstand von 10 SR (Schopper-Riegler) bis 80 SR, am besten jedoch von 25 SR bis 35 SR, auf. Die mittlere längengewichtete Faserlänge des Ausgangmaterials, also des natürlichen Faserstoffs 2, liegt bevorzugt in einem Bereich zwischen 0.6 mm und 6.0 mm, bevorzugter jedoch in einem Bereich zwischen 0.9 mm und 2.2 mm. Der Entwässerungswiderstand wird gemäss der Norm ISO 5267-1, 2. Ausgabe, 1.3.1999 bestimmt. Die Faserlänge wird gemäss der Norm TAPPI T271, pm-91, 1991, bestimmt.

Der gemahlene Faserstoff 2 wird in Wasser suspendiert. Dem im Wasser suspendierten Faserstoff 2 wird ein Additiv in Form eines kationischen Polymers, wie zum Beispiel eine kationische Stärke, ein kationisches Polyethylenimin, kationisches Polyacrylamid, kationisches Polydiallyldimethylammoniumchlorid (PolyDADMAC) oder ein kationischer Polyvinylalkohol beigemischt. Die Dosierung des Additivs sollte vornehmlich bei einer Stoffdichte von 0.1 bis 10 Gew.-%, jedoch am besten bei 0.5 bis 1.0 Gew.-% stattfinden. Das kationische Polymer ermöglicht es, eine homogen verteilte geringe elektrische Leitfähigkeit innerhalb des Isolationselements 1 zu erzielen.

Im bevorzugten Ausführungsbeispiel wird ein Polyethylenimin (BASF, Polymin^{®} SK) in einer Menge verwendet, welches einem Anteil von 0.5% bis 1.0 % Trockensubstanz bezogen auf das Gesamtgewicht des Isolationselements 1 im Trockenzustand entspricht.

Im weiteren Verlauf des Herstellungsprozesses werden der Suspension aus Faserstoff 2 und kationischem Polymer elektrisch leitfähige Partikel 3 mit einem elektrisch nichtleitenden Kern und einer den Kern umgebenden, elektrisch leitfähigen oder halbleitfähigen Umhüllung hinzugegeben. Beim elektrisch nichtleitenden Kern dieser Partikel 3 handelt es sich um einen mineralischen Füllstoff, wie zum Beispiel Kalziumkarbonat, Kreide, Talkum, Bentonit oder, was insbesondere bevorzugt ist, Glimmer. Die leitfähige oder halbleitfähige Umhüllungsschicht weist bevorzugt ein Oxid aus Zinn, Zink, Indium, Titan, Zirkonium, Silizium und/oder Antimon auf. Die Umhüllungsschicht macht bevorzugt 20 - 60 Gew.-% der Gesamtmasse eines einzelnen leitfähigen Partikels 3 aus. Der mineralische Füllstoff des Partikels 3 hat dementsprechend einen Gewichtsanteil von 40 - 80 Gew.-% bezogen auf die Gesamtmasse des leitfähigen Partikels 3.

Die Grösse der leitfähigen Partikel 3 liegt bei 2 - 200 µm, bevorzugt aber bei 100 µm oder weniger, bevorzugter sogar bei 60 µm oder weniger, jedoch vorteilhaft bei wenigstens 2 µm. Der mineralische Füllstoff selbst weist dabei bevorzugt einen Aschegehalt von 99.5 % auf. Die Teilchengröße und die Teilchengrößenverteilung können über verschiedene fachübliche Methoden ermittelt werden. Bevorzugt wird erfindungsgemäß jedoch die Laserbeugungsmethode in einem Standardverfahren mittels eines Malvern Mastersizer 2000, APA2000 (Produkt der Fa. Malvern Instruments Ltd., UK) eingesetzt. Dieses Verfahren hat den Vorteil, dass Partikelgröße und Partikelgrößenverteilung gleichzeitig unter Standardbedingungen bestimmt werden können.

Die Partikelgröße sowie die Dicke von Einzelpartikeln lässt sich außerdem mit Hilfe von SEM (Scanning Electron Microscope) Bildern ermitteln. Bei diesen können Partikelgröße und geometrische Partikeldicke über direktes Ausmessen ermittelt werden. Zur Ermittlung von Durchschnittswerten werden mindestens 1000 Partikel einzeln ausgewertet und die Ergebnisse gemittelt.

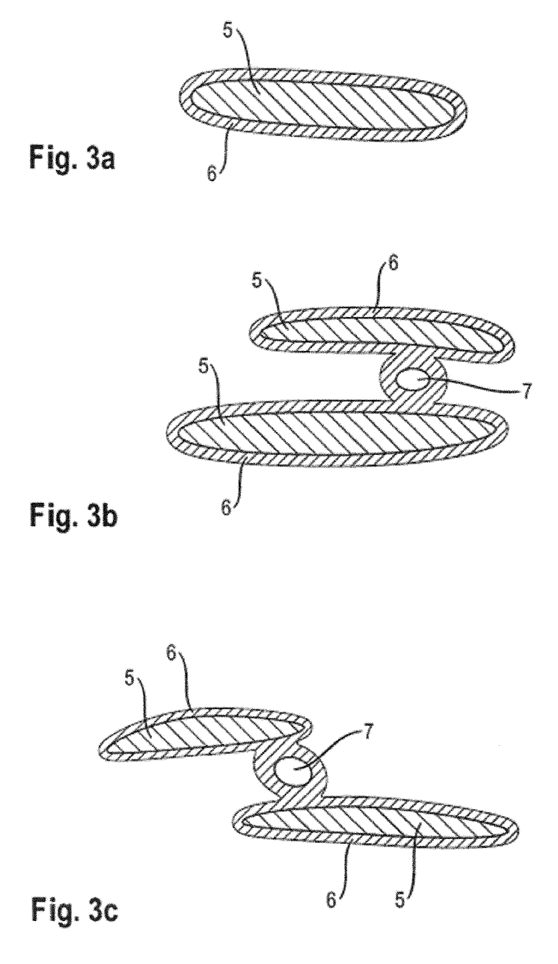

Im bevorzugten Ausführungsbeispiel werden die leitfähigen Partikel 3 durch das Produkt Minatec^{®} 31 CM (Figur 3a) oder Minatec^{®} 51 CM (Figur 3a) der Firma Merck, Darmstadt gebildet. Im Falle von Minatec^{®} 31 CM weisen die leitfähigen Partikel 3 eine Partikelgrösse im Bereich von 2 µm bis 15 µm auf. Im Falle von Minatec^{®} 51 CM weisen die leitfähigen Partikel 3 eine Partikelgrösse im Bereich von 10 µm bis 60 µm auf. Der Anteil der aus Antimonoxid bestehenden Umhüllungschicht 6 beträgt bei Minatec^{®} 31 CM 38 - 54 Gew.-%, und bei Minatec^{®} 51 CM 21 - 36 Gew.-% und derjenige des nichtleitenden, aus Glimmer bestehenden Kerns 5 somit bei Minatec^{®} 31 CM 46 -62 Gew.-% und bei Minatec^{®} 51 CM 64 - 79 Gew.-%.

Alternativ oder zusätzlich ist die Verwendung von leitfähigen Partikeln 3 möglich, die jeweils zwei Glimmerpartikel aufweisen, welche eine leitfähige Schicht, insbesondere Umhüllungsschicht 6, aufweisen und zusätzlich über ein Quarz- oder Talkumpartikel 7 miteinander verbunden sind. Die leitfähige Schicht 6 dieser Partikel 3 weist im Idealfall ein Oxid aus Antimon auf. Die elektrisch leitfähigen Partikel der Produkte der Firma Merck, Darmstadt mit den Handelsnamen Minatec^{®} 40 CM (Figur 3b), Minatec^{®} 60 CM (Figur 3b) weisen einen Quartzpartikel 7 auf. Die elektrisch leitfähigen Partikel des Produktes der Firma Merck, Darmstadt mit dem Handelsnamen Minatec^{®} 42 CM (Figur 3c) enthalten einen Talkumpartikel 7.

In einem weiteren Herstellungsschritt wird der in Wasser suspendierte und mit dem kationischen Polymer 4 sowie den elektrisch leitfähigen Partikeln 3 vermischte Faserstoff 2 mit Hilfe eines Siebes entwässert. In einem anschliessenden Pressvorgang wird das noch im Faserstoff 2 zurückgebliebene Wasser ausgeschieden.

Durch die Entwässerung der Suspension, welche einen Anteil von 60 - 94 % des natürlichen Faserstoffs 2, 0.8 - 1.2 % des kationischen Polymers 4 und 5.2 - 39.2 % von elektrisch leitenden Partikeln 3 aufweist, wird ein einlagiges Gefüge gebildet. Das Isolationselement 1 wird schliesslich bevorzugt aus weniger als 10, bevorzugter aus weniger als 8, und am bevorzugtesten aus einer bis sieben dieser einzelnen Lagen gebildet. Diese Lagen können durch das Aufwickeln auf einer Formatwalze bis zu einer Dicke, welche sich auf den nassen Zustand bei einem Wassergehalt von 50 - 90 % bezieht, von 50 mm zu einem dicken Karton oder Pappe gebildet werden.

Während des Entwässerungsvorgangs wird das Fasermaterial nicht nur mittels Druck entwässert, sondern auch mittels thermischer Erwärmung auf 50 bis 160 °C.

Nach der Entwässerung liegt das mit einem kationischen Polymer 4 und mit leitfähigen Partikeln 3 vermischte Fasermaterial 2 in Form von Papier, Karton oder Pappe vor und hat bevorzugt ein Flächengewicht von 20 g/m² - 12'000 g/m². Der Karton weist bevorzugt ein Flächengewicht von 225 bis kleiner als 600 g/m² auf. Die Pappe weist bevorzugt ein Flächengewicht von 600 - 12'000 g/m² auf. Das Papier weist bevorzugt ein Flächengewicht von kleiner als 225 g/m² auf.

In einem weiteren Herstellungsschritt kann das flächige, entwässerte Fasermaterial 2 mit einem Klebstoff verklebt werden, um dadurch eine Dicke von bis zu 500 mm zu erreichen. Der Klebstoff kann zum Beispiel auf einem Polyesterharz, einem Casein oder einer mikro-oder nanoskaligen Cellulose basieren. Ebenfalls ist es möglich, das mit elektrisch leitfähigen Partikeln 3 und dem kationischen Polymer 4 vermischte Fasermaterial 2 beim Pressvorgang in eine beliebige dreidimensional strukturierte Form zu überführen und im Anschluss an diesen Formprozess thermisch zu trocknen.

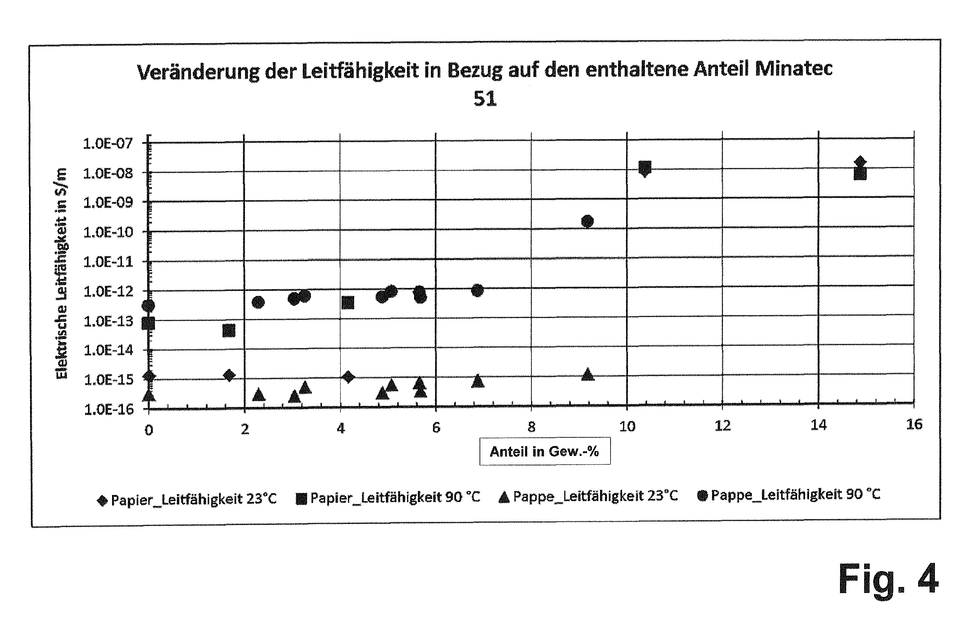

Die Menge an elektrisch leitfähigen Partikeln 3 wird derart gewählt, dass im entwässerten Isolationselement 1 ein Gehalt von 1 - 30 Gew.-%, bevorzugt 4 - 30 Gew.-%, bevorzugter 8 - 30 Gew.-%, am bevorzugtesten 10 - 30 Gew.-%, des Gesamtgewichts des Isolationselements im Trockenzustand vorhanden ist. Diese Partikelmengen erlauben eine definierte Einstellung der elektrischen Leitfähigkeit in Öl insbesondere in den Bereichen von 1*10⁻¹⁶ S/m bis 1*10⁻⁸ S/m, 1*10⁻¹⁴ S/m bis 1*10⁻⁸ S/m sowie 1*10⁻¹² S/m bis 1*10⁻⁸ S/m, welche insbesondere bei Transformatorenanwendungen wichtig sind. Experimente, deren Resultate in der Figur 4 dargestellt sind, haben ergeben, dass die elektrische Leitfähigkeit in Öl des Isolationselements 1 bei deutlich weniger als 10 Gew.-% an Partikeln 3, d.h. insbesondere bei weniger als 6 Gew.-%, kaum erhöht ist im Vergleich zum Fall ohne elektrisch leitfähige Partikel 3. Ab einem Gehalt an elektrisch leitfähigen Partikeln 3 von ca. 6 Gew.-% und bis zu einem Gehalt von ca. 10 Gew.-% steigt die elektrische Leitfähigkeit des trockenen und mit Öl imprägnierten Isolationselements 1 von einem Wert im Bereich zwischen 1*10⁻¹⁶ S/m und 1*10⁻¹¹ S/m bis zu einem Wert im Bereich zwischen 1*10⁻⁹ S/m und 1*10⁻⁷ S/m, insbesondere ca. 1*10⁻⁸ S/m, an. Bei einer weiteren Erhöhung der Konzentration an elektrisch leitfähigen Partikeln 3 im Isolationselement 1 auf über 10 Gew.-% bleibt die elektrische Leitfähigkeit des Isolationselements 1 konstant im Bereich zwischen 1*10⁻⁹ S/m und 1*10⁻⁷ S/m, insbesondere bei ca. 1*10⁻⁸ S/m. Die in Figur 4 dargestellten elektrischen Leitfähigkeiten in Öl wurden am Isolationselement 1 gemessen, welches einerseits als Papier und andererseits als Pappe ausgebildet ist. Beim Papier als auch der Pappe wurden die elektrischen Leitfähigkeiten in Öl jeweils gemäss der Norm IEC 60093, 2. Ausgabe, 1.1.1980 sowie bei den Temperaturen von 23 °C sowie 90 °C ermittelt.

Der Effekt, dass die Leitfähigkeit durch sehr geringe Partikelmengen kaum beeinflusst wird und erst ab einer gewissen Partikelkonzentration ansteigt, um danach ab einer bestimmten Partikelkonzentration einen ungefähr konstanten Wert anzunehmen, kann insbesondere anhand der Figuren 1 und 2 erklärt werden:
Bei einer sehr geringen Konzentration an elektrisch leitfähigen Partikeln 3 im Isolationselement 1, wie es in der Figur 1 gezeigt ist, sind die Partikel 3 gleichmässig zwischen den einzelnen Fasern des Faserstoffs 2 eingelagert und berühren sich gegenseitig kaum. Der massgebende Faktor für die elektrische Leitfähigkeit des Isolationselements 1 stellt dann also der Faserstoff 2 dar. Die elektrische Leitfähigkeit des Isolationselements 1 entspricht somit ungefähr dem Fall eines entsprechenden Isolationselements 1 ohne elektrisch leitfähige Partikel 3.

Ab einer gewissen Konzentration an elektrisch leitfähigen Partikeln 3 von ungefähr 6 Gew.-% beginnen sich die Partikel 3 gegenseitig zu berühren (Figur 2). Die elektrische Leitfähigkeit des Isolationselements 1 wird dadurch zunehmend durch die Partikel 3 bestimmt. Ab einer gewissen Konzentration bilden die Partikel 3 eine Vielzahl von Ketten von sich einander berührenden Partikeln 3, welche sich von der Oberseite des Isolationselements 1 bis zu dessen Unterseite erstrecken. Es findet also ein Perkolationseffekt statt. Eine weitere Erhöhung der Partikelkonzentration führt dann nicht mehr zu einer weiteren Erhöhung der elektrischen Leitfähigkeit des Isolationselements 1, sondern es ist eine Art Sättigungszustand erreicht.

Um mit einer möglichst kleinen Partikelmenge eine für viele Anwendungen erstrebenswerte elektrische Leitfähigkeit des Isolationselements 1 im Bereich zwischen 1*10⁻¹⁶ S/m und 1*10⁻⁷ S/m, insbesondere im Bereich zwischen 1*10⁻¹⁴ S/m und 1*10⁻⁹, zu erreichen, sollte also eine Partikelkonzentration von 1 Gew.-% bis 30 Gew.-%, bevorzugt 4 Gew.-% bis 30 Gew.-%, bevorzugter 8 Gew.-% bis 30 Gew.-%, noch bevorzugter 10 Gew.-% bis 30 Gew.-%, gewählt werden.

Überraschenderweise hat sich in den durchgeführten Experimenten zudem gezeigt, dass die elektrische Leitfähigkeit des Isolationselements 1 ab einer Partikelkonzentration von mehr als ca. 10 Gew.-% weitgehend temperaturunabhängig ist. Auch dies kann damit erklärt werden, dass ab dieser Partikelkonzentration hauptsächlich die Partikel 3 und nicht mehr der von der Temperatur stärker beeinflusste Faserstoff 2 für die elektrische Leitfähigkeit des Isolationselements 1 massgebend sind.

Eine insbesondere bevorzugte Ausführungsform eines Isolationselements 1 weist die folgende Zusammensetzung auf, jeweils bezogen auf das Gesamtgewicht des Isolationselements 1 im Trockenzustand:
- 10 Gew.-% Minatec^{®} 51 CM;
- 1 Gew.-% kationisches Polymer 4;
- 0.5 - 1 Gew.-% Wasser; und
- 88.0 - 88.5 Gew.-% natürlicher Faserstoff 2.

Dabei sind 70 - 99.5 Gew.-% des natürlichen Faserstoffs 2, bezogen auf dessen Gesamtgewicht, reine Cellulose. 0.5 - 20 Gew.-%, bevorzugt 15 Gew.-%, des natürlichen Faserstoffs 2, bezogen auf dessen Gesamtgewicht, sind Hemicellulose. 0 - 19.5 Gew.-%, bevorzugt 3 - 5 Gew.-%, des natürlichen Faserstoffs 2, bezogen auf dessen Gesamtgewicht, sind Lignin.

Selbstverständlich ist die hier beschriebene Erfindung nicht auf die erwähnten Ausführungsformen beschränkt und eine Vielzahl von Abwandlungen ist möglich. Beim Isolationselement 1 muss es sich zum Beispiel nicht zwingend um einen Bestandteil eines Transformators handeln. Das Isolationselement 1 kann auch zur Isolation von anderen elektrotechnischen Bauelementen, wie beispielsweise Kompensationsdrosseln oder Phasenschieber, verwendet werden. Im Falle eines Transformators muss es sich zudem nicht zwingend um einen ölgefüllten Transformator handeln. Das erfindungsgemässe Isolationselement 1 könnte selbstverständlich beispielsweise auch in gasisolierten Transformatoren eingesetzt werden. Eine Vielzahl weiterer Abwandlungen ist denkbar.

### BEZUGSZEICHENLISTE

| | | | |
|---|---|---|---|
| 1 | Isolationselement | 3 | Elektrisch leitfähige Partikel |
| 2 | Faserstoff | 4 | Kationisches Polymer |
| 5 | Kern | 6 | Umhüllung |
| 7 | Quarz- oder Talkumpartikel | | |

## Patentansprüche

1. Isolationselement (1) mit geringer elektrischer Leitfähigkeit zur elektrischen Isolation eines elektrotechnischen Bauelements im Hochspannungsbereich, aufweisend
- einen natürlichen Faserstoff (2); sowie
- elektrisch leitfähige Partikel (3) mit einem elektrisch nichtleitenden Kern (5) und einer den Kern (5) umgebenden, elektrisch leitfähigen oder halbleitfähigen Umhüllung (6);
**dadurch gekennzeichnet, dass**
das Isolationselement (1) ausserdem ein kationisches Polymer (4) aufweist.

2. Isolationselement (1) nach Anspruch 1, wobei das kationische Polymer (4) 0.1 - 10 Gew.-%, bevorzugt 0.2 - 2 Gew.-%, bevorzugter 0.5 - 1.0 Gew.-% bezogen auf das Gesamtgewicht des Isolationselements (1) im Trockenzustand ausmacht.

3. Isolationselement (1) nach Anspruch 1 oder 2, wobei die elektrisch leitfähigen Partikel (3) 1 - 30 Gew.-%, bevorzugt 4 - 30 Gew.-%, bevorzugter 8 - 30 Gew.-%, noch bevorzugter 8 - 30 Gew.-%, am bevorzugtesten 10 - 30 Gew.-% bezogen auf das Gesamtgewicht des Isolationselements (1) im Trockenzustand ausmachen.

4. Isolationselement (1) nach einem der vorhergehenden Ansprüche, wobei der natürliche Faserstoff (2) wenigstens 60 Gew.-%, insbesondere wenigstens 80 Gew.-%, bezogen auf das Gesamtgewicht des Isolationselements (1) im Trockenzustand ausmacht.

5. Isolationselement (1) nach einem der vorhergehenden Ansprüche, wobei die Umhüllung (6) der elektrisch leitfähigen Partikel (3) ein Metall enthält.

6. Isolationselement (1) nach Anspruch 5, wobei die Umhüllung (6) ein Metalloxid enthält, welches insbesondere mit einem Fremdatom dotiert ist.

7. Isolationselement (1) nach einem der vorhergehenden Ansprüche, wobei die Grösse der elektrisch leitfähigen Partikel (3) im Bereich von 2 µm bis 200 µm, insbesondere im Bereich von bis 2 µm bis 100 µm, liegt.

8. Isolationselement (1) nach einem der vorhergehenden Ansprüche, wobei der Kern (5) der elektrisch leitfähigen Partikel (3) einen natürlichen oder synthetischen Glimmer aufweist.

9. Isolationselement (1) nach Anspruch 8, wobei es sich bei den elektrisch leitfähigen Partikeln (3) um Minatec^{®} 51 CM und/oder Minatec^{®} 31 CM handelt.

10. Isolationselement (1) nach einem der vorhergehenden Ansprüche, wobei es sich beim kationischen Polymer (4) um Polyethylenimin oder um kationische Stärke handelt.

11. Isolationselement (1) nach einem der vorhergehenden Ansprüche, wobei der natürliche Faserstoff (2) mindestens 70 Gew.-% an Cellulose bezogen auf das Gesamtgewicht des natürlichen Faserstoffs (2) im Trockenzustand enthält.

12. Isolationselement (1) nach einem der vorhergehenden Ansprüche, wobei der natürliche Faserstoff (2) aus Holz und/oder Einjahrespflanzen, insbesondere Baumwolle, hergestellt ist.

13. Isolationselement (1) nach einem der vorhergehenden Ansprüche, wobei der natürliche Faserstoff (2) mit Öl, insbesondere Transformatorenöl, imprägniert ist, und wobei das Isolationselement eine elektrische Leitfähigkeit von 1*10⁻¹⁶ S/m bis 1*10⁻⁷ S/m, insbesondere von 1*10⁻¹⁴ S/m bis 1*10⁻⁹ S/m, aufweist.

14. Elektrotechnisches Bauelement für den Hochspannungsbereich, aufweisend ein Isolationselement (1) nach einem der vorhergehenden Ansprüche.

15. Elektrotechnisches Bauelement nach Anspruch 14, wobei es sich beim elektrotechnischen Bauelement um einen Transformator, insbesondere einen HVDC-Stromrichtertransformator, handelt.

16. Verfahren zur Herstellung eines Isolationselements (1) nach einem der Ansprüche 1 bis 13, aufweisend zumindest die folgenden Verfahrensschritte:
- Vermischen eines natürlichen Faserstoffs (2) mit elektrisch leitfähigen Partikeln (3), die einen elektrisch nichtleitenden Kern (5) sowie eine den Kern (5) umgebende, elektrisch leitfähige oder halbleitfähige Umhüllung (6) aufweisen; und
- Entwässern des mit den elektrisch leitfähigen Partikeln (3) vermischten natürlichen Faserstoffs (2);
**dadurch gekennzeichnet, dass**
das Verfahren den zusätzlichen Verfahrensschritt aufweist, dass dem natürlichen Faserstoff (2) vor dem Entwässern ein kationisches Polymer (4) beigemischt wird.
